# DEMANDE DE BREVET EUROPEEN

(11) **EP 3 032 266 A1**
(43) Date de publication de la demande: **15.06.2016**
(21) Numéro de dépôt: 14196726.5
(22) Date de dépôt: 08.12.2014
(51) Int. Cl.: G01P 13/02, G04B 47/06, G04B 37/08

(54) **PIÈCE D'HORLOGERIE COMPRENANT UN MODULE ANÉMOMÈTRE**

(71) Demandeur: Breva Genève SA, 1208 Genève (CH)
(72) Inventeur: Dupontreué, Vincent, 1207 Genève (CH)
(74) Mandataire: Micheli & Cie SA

(57) **Abrégé**

La pièce d'horlogerie comprend une boîte (2) définissant un espace intérieur étanche (17) dans lequel sont logés un mouvement (3) et un premier dispositif d'affichage (4) associé au mouvement (3).La boîte (2) définit en outre un logement (23) qui ne communique pas avec l'espace intérieur étanche (17) et dans lequel est logé un module de complication (22), tel qu'un anémomètre, comprenant un dispositif de mesure (36) et un deuxième dispositif d'affichage (37) associé au dispositif de mesure (36).

## Description

La présente invention concerne une pièce d'horlogerie comprenant au moins une complication, c'est-à-dire au moins une fonction autre que la mesure et l'affichage de l'heure.

On connaît par la demande de brevet CH 707339 une pièce d'horlogerie comprenant une complication du type anémomètre, pour mesurer la vitesse du vent. Cette pièce d'horlogerie comprend une boîte renfermant un mouvement et un cadran principal pour l'affichage de l'heure. La boîte définit un logement dans lequel est monté un support contenant des coupelles d'anémomètre pour le captage du vent. Par l'intermédiaire d'un couplage magnétique, les coupelles sont reliées à un pignon qui lui-même est relié cinématiquement à un organe indicateur coopérant avec un cadran secondaire prévu sur le cadran principal. Le couplage magnétique comprend un aimant solidaire en rotation des coupelles et une cloche métallique solidaire en rotation du pignon et entraînée magnétiquement par les mouvements de l'aimant. L'organe indicateur est soumis à l'action d'un ressort de rappel en spirale qui s'oppose à la rotation de la cloche pour indiquer la vitesse du vent sur le cadran secondaire. Le support contenant les coupelles peut être extrait de son logement par une pression sur un bouton poussoir pour permettre aux coupelles de capter le vent.

Une telle pièce d'horlogerie présente l'inconvénient que l'étanchéité de la boîte est difficile à assurer. En effet, un joint d'étanchéité entre le support des coupelles et son logement produirait une friction trop grande pour autoriser l'extraction du support. De l'eau peut donc pénétrer entre le support des coupelles et la paroi du logement puis s'introduire dans le mouvement par la liaison cinématique entre le pignon précité et l'organe indicateur.

La présente invention vise à remédier à cet inconvénient et propose à cette fin une pièce d'horlogerie comprenant une boîte définissant un espace intérieur étanche dans lequel sont logés un mouvement et un premier dispositif d'affichage associé au mouvement, caractérisée en ce que la boîte définit en outre un logement qui ne communique pas avec l'espace intérieur étanche et dans lequel est logé un module de complication comprenant un dispositif de mesure et un deuxième dispositif d'affichage associé au dispositif de mesure.

Ainsi, dans la présente invention, un module de complication tel qu'un anémomètre est logé dans un logement qui ne communique pas avec un espace intérieur étanche contenant le mouvement et le dispositif d'affichage associé, et le module de complication comprend son propre dispositif d'affichage. Aucune liaison cinématique n'est nécessaire entre le module de complication, d'une part, et le mouvement ou premier dispositif d'affichage, d'autre part. La présence de la complication et de son logement ne nuit donc pas à l'étanchéité dudit espace intérieur.

De préférence, le logement est entouré par l'espace intérieur étanche.

De préférence également, la boîte comprend une lunette et un fond, et le mouvement et le logement sont tous les deux situés entre cette lunette et ce fond.

Le logement peut être constitué par l'intérieur d'un conteneur fixé par sa partie supérieure à la lunette de la boîte.

Typiquement, le module de complication est mobile par rapport à la boîte, par exemple mobile en translation perpendiculairement au plan de la boîte de sorte à pouvoir prendre une position haute où il est extrait du logement et une position basse où il est rentré dans le logement.

Le module de complication peut comprendre une cage dans laquelle sont montés le dispositif de mesure et le deuxième dispositif d'affichage.

De préférence, la cage comprend une glace à travers laquelle le deuxième dispositif d'affichage est visible, cette glace étant distincte d'une glace de la boîte à travers laquelle le premier dispositif d'affichage est visible.

Le deuxième dispositif d'affichage peut comprendre un cadran et un organe indicateur coopérant avec le cadran.

Dans l'application particulière de l'invention où le module de complication est un anémomètre, le dispositif de mesure comprend avantageusement des moyens de captage du vent et une liaison entièrement mécanique, c'est-à-dire notamment sans couplage magnétique, reliant les moyens de captage du vent au deuxième dispositif d'affichage. La liaison entièrement mécanique comprend typiquement un rouage. Le dispositif de mesure peut comprendre en outre un organe de rappel agencé pour agir sur l'organe indicateur du deuxième dispositif d'affichage.

Le mouvement est typiquement entièrement mécanique.

D'autres caractéristiques et avantages de la présente invention apparaîtront à la lecture de la description détaillée suivante faite en référence aux dessins annexés dans lesquels :
- la figure 1 est une vue plane de dessus d'une pièce d'horlogerie selon l'invention ;
- la figure 2 est une vue en coupe de ladite pièce d'horlogerie prise suivant la ligne II-II de la figure 1 ;
- la figure 3 est une vue en perspective éclatée d'une partie de la boîte de ladite pièce d'horlogerie ;
- la figure 4 est une vue en perspective éclatée d'un anémomètre et de son conteneur équipant ladite pièce d'horlogerie ;
- la figure 5 est une vue en coupe de l'anémomètre et de son conteneur en position fermée ; et
- la figure 6 est une vue de côté de la boîte de la pièce d'horlogerie avec l'anémomètre en position ouverte.

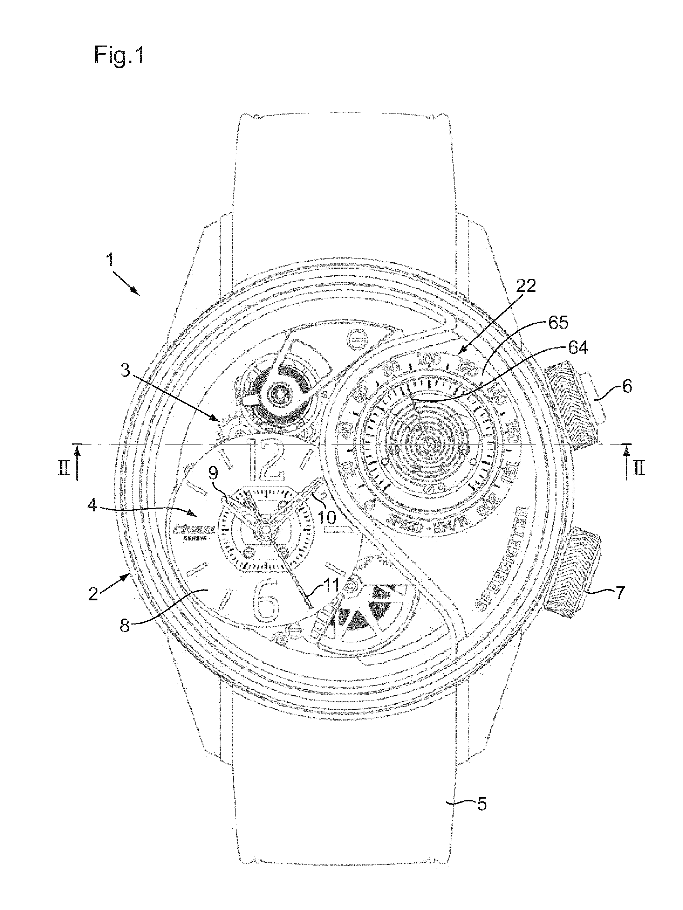

En référence à la figure 1, une pièce d'horlogerie 1 du type montre-bracelet selon un mode de réalisation particulier de l'invention comprend une boîte 2 renfermant un mouvement mécanique 3 et un dispositif d'affichage de l'heure 4, un bracelet 5 attaché à la boîte 2, et des organes d'actionnement manuel, à savoir un bouton poussoir verrouillable 6 et une couronne de remontage et de mise à l'heure 7. Le dispositif d'affichage de l'heure 4 comprend un cadran 8 et des aiguilles des heures, minutes et secondes 9, 10, 11 dont les rotations sont commandées par le mouvement 3. La couronne 7, située à 4 heures dans l'exemple illustré, permet de manière classique de remonter et mettre à l'heure le mouvement 3, c'est-à-dire de corriger la position des aiguilles 9, 10, 11. Dans l'exemple illustré, le bouton poussoir 6 est situé à 2 heures. Sa fonction sera expliquée plus loin.

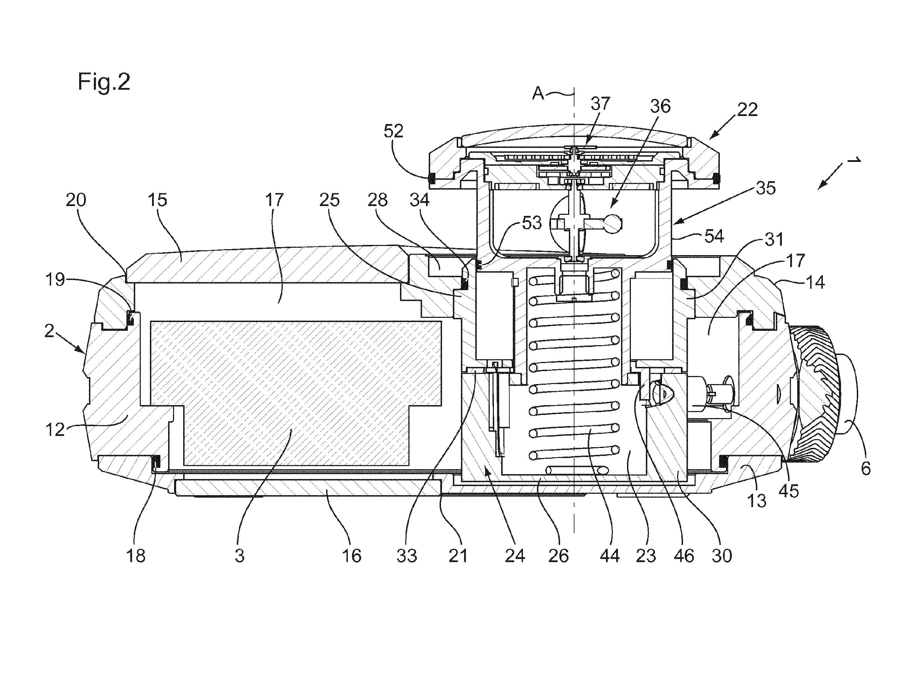

Comme le montre la figure 2, la boîte 2 comprend une carrure 12 de laquelle font saillie le bouton poussoir 6 et la couronne 7, un fond 13, une lunette 14 et une glace 15 à travers laquelle le dispositif d'affichage de l'heure 4 et une partie du mouvement 3 sont visibles. Le fond 13 peut comprendre une ouverture fermée par une autre glace 16, comme représenté, pour rendre visible aussi le dessous du mouvement 3.

De manière classique en soi, la boîte 2 définit un espace intérieur 17 rendu étanche par des joints d'étanchéité. Dans l'exemple illustré, des joints d'étanchéité 18, 19, 20, 21 sont placés respectivement entre le fond 13 et la carrure 12, entre la lunette 14 et la carrure 12, entre la glace 15 et la lunette 14 et entre l'autre glace 16 et le fond 13. Les joints d'étanchéité 20, 21 pour les glaces 15, 16 peuvent être sous la forme d'une colle étanche. L'espace intérieur étanche 17 contient le mouvement 3 et le dispositif d'affichage de l'heure 4, qui sont ainsi protégés de l'humidité. L'étanchéité peut être assurée pour protéger la pièce d'horlogerie jusqu'à plusieurs dizaines de mètres sous l'eau, par exemple 30 mètres.

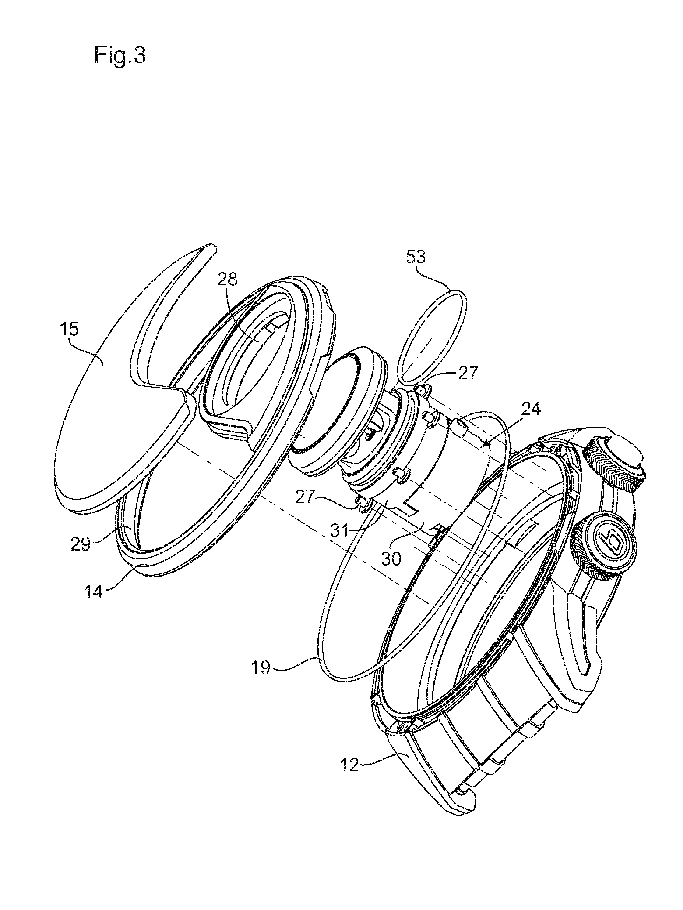

La pièce d'horlogerie 1 comprend également un module de complication 22 consistant en un anémomètre pour mesurer soit la vitesse du vent, soit la vitesse du porteur de la pièce d'horlogerie, la vitesse du vent étant alors considérée comme nulle. L'anémomètre 22 est placé dans un logement 23 à l'intérieur de la boîte 2 qui ne communique pas avec (ne fait pas partie de) l'espace intérieur étanche 17, c'est-à-dire un logement dont la séparation d'avec l'espace intérieur 17 est elle-même étanche. Le logement 23 est constitué par l'intérieur d'un conteneur cylindrique 24 ouvert dans sa partie supérieure et comprenant une paroi cylindrique 25 et un fond 26. Le fond 26 est proche et directement en regard du fond 13 de la boîte 2. Le conteneur 24 est fixé par sa partie supérieure à la lunette 14, par exemple au moyen de vis 27 comme représenté à la figure 3. La partie supérieure du conteneur 24 est située dans une ouverture traversante 28 de la lunette 14, permettant au logement 23 de déboucher sur la face supérieure (face côté cadran) de la pièce d'horlogerie 1. L'ouverture 28 est disjointe d'une ouverture 29 fermée par la glace 15. Cette dernière, comme le mouvement 3, a ainsi une forme en croissant de lune pour libérer de la place pour le conteneur 24.

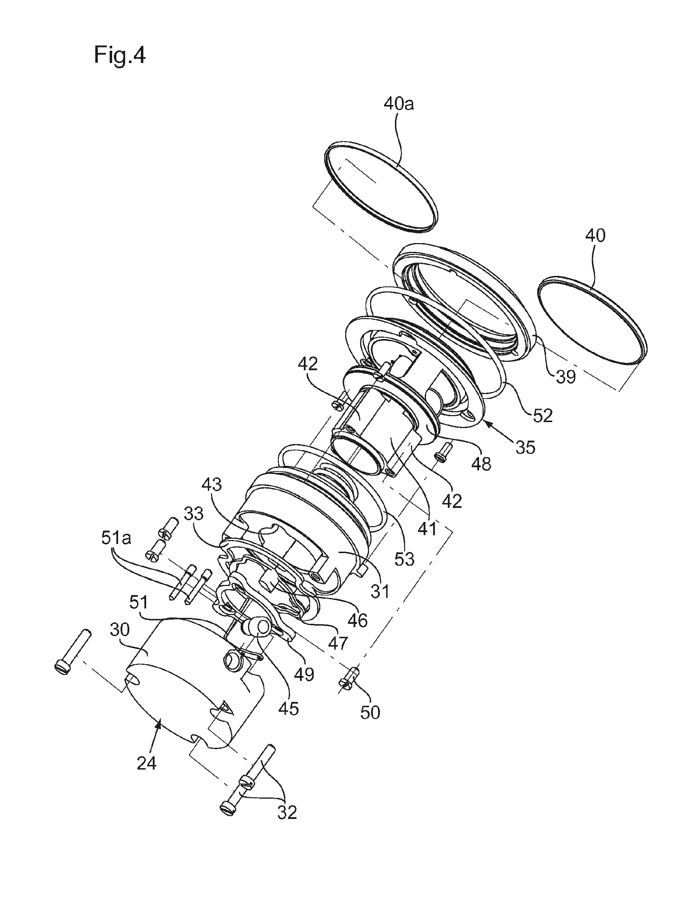

Pour faciliter le montage de l'anémomètre 22 dans le logement 23, le conteneur 24 est en deux parties cylindriques 30, 31 fixées l'une à l'autre par des vis 32 (cf. figure 4) et séparées l'une de l'autre par un joint d'étanchéité 33 empêchant le passage d'eau entre le logement 23 et l'espace intérieur étanche 17. Un autre joint d'étanchéité 34 (cf. figure 2) est placé entre la partie supérieure du conteneur 24 et la paroi de l'ouverture traversante 28 de la lunette 14 pour empêcher la pénétration d'eau dans l'espace intérieur étanche 17 par l'ouverture 28. Le logement 23 est ainsi situé à l'intérieur de la boîte 2 en étant entouré par l'espace intérieur étanche 17 et séparé de cet espace par la paroi cylindrique 25 et le fond 26 du conteneur 24.

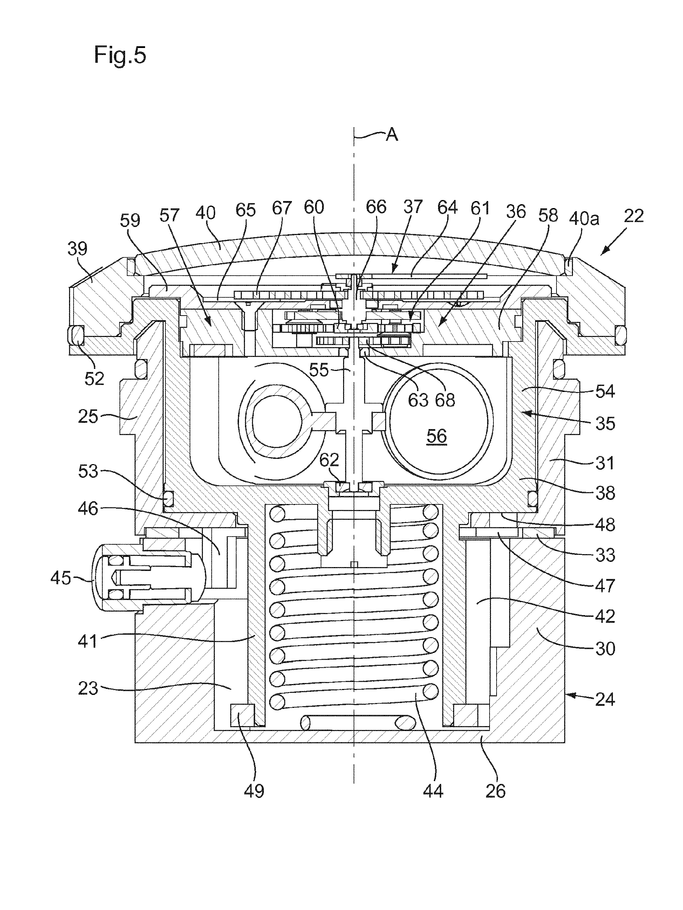

L'anémomètre 22 comprend une cage 35 dans laquelle sont logés un dispositif de mesure 36 et un dispositif d'affichage 37 associé au dispositif de mesure 36. La cage 35 est montée coulissante dans le logement 23 le long de l'axe commun A de la cage 35 et du logement 23, perpendiculairement au plan de la boîte 2, pour pouvoir être partiellement extraite du logement 23 (cf. figure 2) ou rentrée dans celui-ci (cf. figure 5). La cage 35 comprend (cf. figure 5) un corps 38, une lunette 39 fixée à la partie supérieure du corps 38 et une glace 40 fixée de manière étanche, au moyen d'un joint 40a, dans l'ouverture de la lunette 39. Une partie inférieure cylindrique creuse 41 du corps 38 comprend des nervures de guidage 42 (cf. figures 4 et 5) coopérant avec des rainures de guidage correspondantes 43 pratiquées dans la paroi du logement 23 pour guider le coulissement de la cage 35 et empêcher une rotation de cette dernière. La partie inférieure cylindrique creuse 41 loge un ressort à boudin 44 tendant à éloigner la cage 35 du fond 26 du conteneur 24. Ce ressort 44 est libéré par une pression sur le bouton poussoir 6. A cet effet, le bouton poussoir 6 traverse de manière étanche la paroi de la carrure 12 et agit sur un élément poussoir 45 traversant lui-même de manière étanche la paroi cylindrique 25 du conteneur 24. L'élément poussoir 45 agit sur un élément d'actionnement 46 solidaire d'une clavette 47 en forme d'anneau irrégulier. La clavette 47 est maintenue axialement entre les deux parties 30, 31 du conteneur 24 et peut tourner sensiblement autour de l'axe A de la cage 35 en étant guidée dans un logement formé par les deux parties de conteneur 30, 31. Lorsque l'anémomètre 22 est dans sa position rentrée, visible à la figure 5, des parties de la clavette 47 sont entre une surface 48 du corps 38 et les nervures de guidage 42 (cf. figures 4 et 5) et retiennent ainsi la cage 35 dans le logement 23. Lors d'une rotation de la clavette 47 par une pression sur le bouton poussoir 6, lesdites parties de la clavette 47 quittent leur position où elles étaient en regard des nervures de guidage 42. La cage 35 n'est alors plus retenue et le ressort 44 la pousse en dehors du logement 23 jusqu'à ce qu'une plaque de butée 49 fixée à la base du corps 38, par exemple par des vis 50 reçues à l'intérieur des nervures de guidage 42, arrive au contact de la clavette 47. L'anémomètre 22 peut être rentré dans son logement 23 par une pression sur la glace 40. Un ressort de rappel 51 (cf. figure 4), en forme de lame coudée fixée à la partie inférieure 30 du conteneur 24 par des vis 51 a, ramène la clavette 47 à sa position initiale pour retenir la cage 35 lorsque cette dernière est rentrée.

Un joint d'étanchéité 52 situé dans un logement formé par la lunette 39 et le corps 38 de la cage 35 est comprimé contre la paroi de l'ouverture 28 de la lunette 14 lorsque l'anémomètre 22 est dans sa position rentrée ou basse. Dans cette position, grâce à ce joint 52, l'anémomètre 22 et le logement 23 sont étanches, par exemple jusqu'à 30 mètres sous l'eau comme pour le reste de la pièce d'horlogerie 1. Lorsque l'anémomètre 22 est dans sa position haute ou sortie, l'anémomètre 22 et le logement 23 ne sont pas étanches mais un joint 53 situé entre la paroi du logement 23 et le corps 38 empêche la poussière de pénétrer dans le logement 23. Grâce à la séparation de l'espace intérieur 17 et du logement 23, l'espace intérieur 17 reste lui toujours étanche quelle que soit la position de l'anémomètre 22.

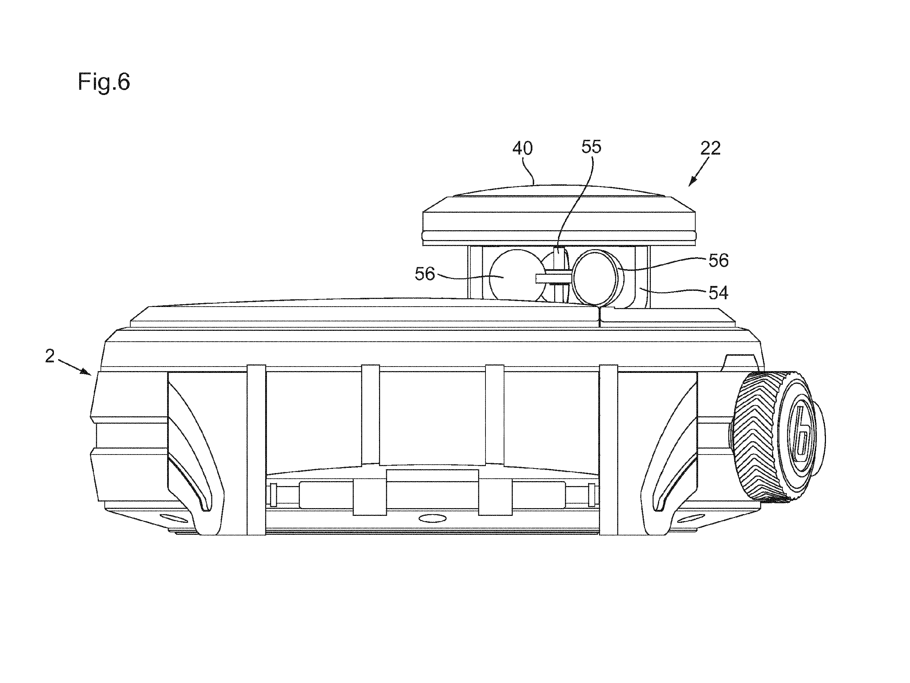

Dans sa partie supérieure, le corps 38 de la cage 35 comprend des piliers 54 qui délimitent un espace ouvert dans lequel est monté un arbre 55 duquel est solidaire un ensemble de coupelles 56 (cf. figures 5 et 6). Un bâti 57 fixé dans la partie d'extrémité supérieure du corps 38, et comprenant une plaque évidée 58, une contre-plaque 59 et un ou plusieurs ponts intermédiaires 60, sert de support à un rouage 61 qui relie l'arbre 55 au dispositif d'affichage 37. Des paliers 62, 63 placés dans le corps 38 et le bâti 57 reçoivent les pivots de l'arbre 55. Le dispositif d'affichage 37 comprend une aiguille indicatrice 64 coopérant avec un cadran 65 (cf. figures 1 et 5) défini par la face supérieure de la contre-plaque 59, l'aiguille 64 et le cadran 65 étant visibles à travers la glace 40. L'aiguille indicatrice 64 est solidaire d'un arbre 66 qui est soumis à l'action d'un ressort de rappel en spirale 67. L'extrémité intérieure de ce ressort 67 est fixée à l'arbre 66 tandis que son extrémité extérieure est fixée au bâti 57. L'ensemble comprenant les coupelles 56, les arbres 55, 66, le rouage 61 et le ressort de rappel en spirale 67 constitue le dispositif de mesure 36. Dans des variantes, les coupelles 56 pourraient être remplacées par d'autres types de moyens de captage du vent, par exemple une girouette ou une hélice.

Ainsi, lorsque l'utilisateur souhaite mesurer la vitesse du vent à l'aide de la pièce d'horlogerie 1, il appuie sur le bouton poussoir 6 ce qui fait sortir l'anémomètre 22 de son logement 23. L'air passant entre les piliers 54 fait tourner les coupelles 56, donc l'arbre 55. L'arbre 55 fait lui-même tourner un pignon 68 du rouage 61 qui lui est solidaire, lequel, par l'intermédiaire des autres mobiles du rouage 61, fait tourner l'arbre 66 qui porte l'aiguille indicatrice 64. Le ressort de rappel en spirale 67 s'oppose à la rotation de l'arbre 66. Les rapports d'engrenage dans le rouage 61 et la force du ressort de rappel en spirale 67 sont choisis pour qu'à l'équilibre des forces, moment où l'arbre 66 arrête de tourner, la position angulaire de l'aiguille 64 indique la vitesse du vent. On notera qu'à ce moment où la force du ressort 67 compense exactement la force due au vent appliquée à l'arbre 66, les coupelles 56 arrêtent elles aussi de tourner, contrairement aux anémomètres classiques à couplage magnétique. Lorsque les coupelles 56 ne sont plus soumises au vent, par exemple parce que l'anémomètre a été rentré dans son logement 23, le ressort 67 ramène l'aiguille 64 dans sa position initiale.

Il est connu dans l'horlogerie que les champs magnétiques peuvent perturber les réglages d'un mouvement mécanique. Du fait qu'il est entièrement mécanique, c'est-à-dire notamment sans couplage magnétique, l'anémomètre 22 présente l'avantage de ne pas perturber le mouvement 3.

La présente invention a été décrite ci-dessus à titre d'exemple uniquement. Il va de soi que des modifications pourraient être faites sans sortir du cadre de l'invention revendiquée. L'homme du métier comprendra en particulier que l'invention peut s'appliquer à d'autres modules de complication qu'un anémomètre, par exemple un thermomètre ou un hygromètre, et qu'elle peut s'appliquer à des modules de complication qui sont immobiles dans la boîte 2. Par ailleurs, le dispositif d'affichage du module de complication, de même que celui associé au mouvement, pourrait être tactile plutôt que visuel.

## Revendications

1. Pièce d'horlogerie comprenant une boîte (2) définissant un espace intérieur étanche (17) dans lequel sont logés un mouvement (3) et un premier dispositif d'affichage (4) associé au mouvement (3), **caractérisée en ce que** la boîte (2) définit en outre un logement (23) qui ne communique pas avec l'espace intérieur étanche (17) et dans lequel est logé un module de complication (22) comprenant un dispositif de mesure (36) et un deuxième dispositif d'affichage (37) associé au dispositif de mesure (36).

2. Pièce d'horlogerie selon la revendication 1, **caractérisée en ce que** le logement (23) est entouré par l'espace intérieur étanche (17).

3. Pièce d'horlogerie selon la revendication 1 ou 2, **caractérisée en ce que** la boîte (2) comprend une lunette (14) et un fond (13) et **en ce que** le mouvement (3) et le logement (23) sont tous les deux situés entre cette lunette (14) et ce fond (13).

4. Pièce d'horlogerie selon l'une quelconque des revendications 1 à 3, **caractérisée en ce que** le logement (23) est constitué par l'intérieur d'un conteneur (24) fixé par sa partie supérieure à une lunette (14) de la boîte (2).

5. Pièce d'horlogerie selon l'une quelconque des revendications 1 à 4, **caractérisée en ce que** le module de complication (22) est mobile par rapport à la boîte (2).

6. Pièce d'horlogerie selon la revendication 5, **caractérisée en ce que** le module de complication (22) est mobile en translation perpendiculairement au plan de la boîte (2), de sorte à pouvoir prendre une position haute où il est extrait du logement (23) et une position basse où il est rentré dans le logement (23).

7. Pièce d'horlogerie selon l'une quelconque des revendications 1 à 6, **caractérisée en ce que** le module de complication (22) comprend une cage (35) dans laquelle sont montés le dispositif de mesure (36) et le deuxième dispositif d'affichage (37).

8. Pièce d'horlogerie selon la revendication 7, **caractérisée en ce que** la cage (35) comprend une glace (40) à travers laquelle le deuxième dispositif d'affichage (37) est visible, cette glace (40) étant distincte d'une glace (15) de la boîte (2) à travers laquelle le premier dispositif d'affichage (4) est visible.

9. Pièce d'horlogerie selon l'une quelconque des revendications 1 à 8, **caractérisée en ce que** le deuxième dispositif d'affichage (37) comprend un cadran (65) et un organe indicateur (34) coopérant avec le cadran (65).

10. Pièce d'horlogerie selon l'une quelconque des revendications 1 à 9, **caractérisée en ce que** le module de complication (22) est un anémomètre.

11. Pièce d'horlogerie selon la revendication 10, **caractérisée en ce que** le dispositif de mesure (36) comprend des moyens de captage du vent (56) et une liaison entièrement mécanique (55, 61, 66) reliant les moyens de captage du vent (56) au deuxième dispositif d'affichage (37).

12. Pièce d'horlogerie selon la revendication 11, **caractérisée en ce que** la liaison entièrement mécanique (55, 61, 66) comprend un rouage (61).

13. Pièce d'horlogerie selon la revendication 11 ou 12, **caractérisée en ce que** le dispositif de mesure (36) comprend en outre un organe de rappel (67) agencé pour agir sur un organe indicateur (64) du deuxième dispositif d'affichage (37).

14. Pièce d'horlogerie selon l'une quelconque des revendications 1 à 13, **caractérisée en ce que** le mouvement (3) est entièrement mécanique.

15. Pièce d'horlogerie selon l'une quelconque des revendications 1 à 14, **caractérisée en ce qu'**elle consiste en une montre-bracelet.
